Europäisches Patentamt

(19) European Patent Office

Office européen des brevets

(11) Numéro de publication: **0 133 143**
**A1**

(12) ## DEMANDE DE BREVET EUROPEEN

(21) Numéro de dépôt: **84420125.1**

(22) Date de dépôt: **17.07.84**

(51) Int. Cl.⁴: **C 02 F 1/68**
**B 05 B 7/32, B 01 F 5/04**

(30) Priorité: **21.07.83 FR 8312504**

(43) Date de publication de la demande:
**13.02.85 Bulletin 85/7**

(84) Etats contractants désignés:
**AT BE CH DE FR GB IT LI NL SE**

(71) Demandeur: **Waldner, Roland**
**69, bd du Fier**
**F-74000 Annecy(FR)**

(72) Inventeur: **Waldner, Roland**
**69, bd du Fier**
**F-74000 Annecy(FR)**

(74) Mandataire: **de Beaumont, Michel**
**Cabinet Poncet 7, chemin de Tillier B.P. 317**
**F-74008 Annecy Cedex(FR)**

(54) **Dispositif portatif d'injection et de mélange d'un produit liquide dans un circuit d'eau.**

(57) Le dispositif comprend un réservoir (2) amovible relié par une canalisation secondaire (17) à une chambre de mélange (11) parcourue par de l'eau amenée par une canalisation d'entrée (4, 5) et évacuée par une canalisation de sortie (10). Le réservoir (2) comporte une paroi mobile (20) repoussée par de l'eau admise dans une chambre de poussée (27) pénétrant depuis la canalisation d'entrée (4) à travers une seconde canalisation secondaire (28) obturable par un robinet (6). Une pièce d'adaptation (3) amovible maintient le réservoir (2) sur un corps principal (1).

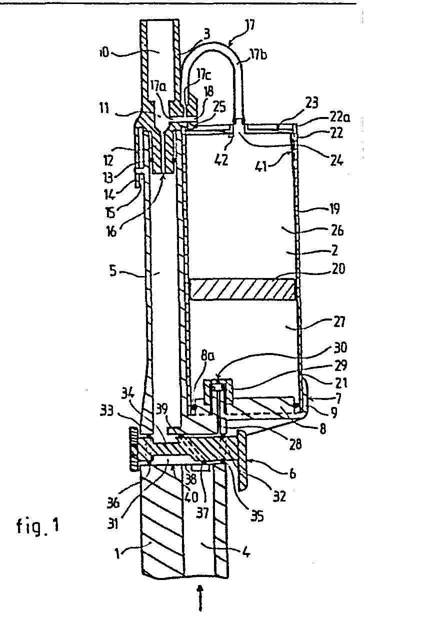

fig. 1

les réglages.

Un autre objet de l'invention est de résoudre le problème du calibrage de l'écoulement de fluide dans l'eau, et notamment le réglage de concentration pour des produits de fluidité différente.

L'invention est particulièrement adaptée à la réalisation de dispositifs à réservoirs amovibles, et par exemple de dispositifs dans lesquels on laisse le produit dans son emballage d'origine, l'emballage lui-même faisant partie du dispositif, ce qui facilite considérablement le ravitaillement en produit. L'emballage est amovible et interchangeable, permettant le changement rapide de produit, éventuellement pour un changement rapide d'application telle que lavage, épandage.

Selon un autre objet de l'invention, le dispositif est peu sensible aux variations de pressions présentes dans la canalisation d'eau, le mélange pouvant être réglé selon une concentration donnée indépendamment de cette pression et de la vitesse d'écoulement de l'eau dans la canalisation.

Pour atteindre ces objets ainsi que d'autres, le dispositif comprend un corps principal servant d'organe de préhension et comportant une canalisation d'entrée obturable par un robinet principal de réglage de débit et une canalisation de sortie reliée à la canalisation d'entrée par une chambre de mélange elle-même raccordée par une première canalisation secondaire à un réservoir destiné à contenir le produit à injecter, le réservoir comprenant une enveloppe tubulaire rigide dans laquelle coulisse de façon étanche une paroi déplaçable en forme de piston formant séparation entre le réservoir et une chambre de poussée raccordée à la canalisation d'entrée par une seconde canalisation secondaire ménagée dans le corps et munie d'un robinet secondaire de réglage de débit ; le réservoir forme une partie amovible, comportant l'enveloppe tubulaire fermée d'une part à sa seconde extrémité par un fond muni d'un orifice de sortie et fermée d'autre part par la paroi déplaçable ; le corps comporte une portion formant réceptacle dans laquelle débouche la seconde canalisation secondaire ; l'enveloppe tubulaire s'adapte, par sa première extrémité, sur le réceptacle pour définir la chambre de poussée ; des moyens d'assemblage solidarisent le réservoir sur le corps ; des moyens d'étanchéité assurent l'étanchéité entre le réceptacle et l'enveloppe tubulaire et entre l'orifice de sortie et la première canalisation secondaire.

Selon une autre caractéristique de l'invention, l'enveloppe rigide a une première extrémité venant s'emmancher de façon étanche sur une partie cylindrique du fond du réceptacle avec interposition d'un joint torique d'étanchéité, la seconde extrémité de l'enveloppe rigide étant sollicitée par les moyens d'assemblage la repoussant en direction du réceptacle.

Selon une autre caractéristique de l'invention, le dispositif comprend en outre une pièce d'adaptation rapportée différente pour chaque application visée, c'est-à-dire par exemple une pièce d'adaptation pour l'épandage, une pièce d'adaptation différente pour la pulvérisation, et une pièce d'adaptation différente pour le lavage. Les pièces d'adaptation comportent la canalisation de sortie, la canalisation secondaire et des moyens de connexion à l'orifice de sortie du réservoir. La pièce d'adaptation comporte en outre la chambre de mélange, et un orifice calibré connectable sur la canalisation d'entrée du corps et destiné à assurer le débit d'eau convenable pour l'application visée ; la pièce d'adaptation est retenue sur le corps par des moyens d'accrochage et forme elle-même butée et moyen d'assemblage pour le réservoir.

D'autres objets, caractéristiques et avantages de la présente invention, ressortiront de la description suivante d'un mode de réalisation particulier, faite en relation avec la figures jointe représentant une vue en coupe longitudinale d'un dispositif selon la présente invention.

Comme le représente la figure, le dispositif de la présente invention comprend de façon générale un corps principal 1 sur lequel s'adapte la conduite d'alimentation d'eau, non représentée sur le figure, un réservoir amovible 2, et une pièce d'adaptation rapportée 3. Le corps 1 comprend une canalisation d'entrée pouvant être connectée à la conduite d'alimentation d'eau, et qui se compose d'un premier alésage 4 et d'un second alésage 5 successifs séparés par un organe de commande unique de débit 6 en forme de robinet à tiroir.

Le corps 1 comprend un réceptacle latéral 7 en forme de cylindre borgne comportant un fond 8 surmonté par une paroi latérale 9 dont la surface intérieure est conique évasée.

La pièce d'adaptation 3 comprend une canalisation de sortie 10 prolongée par un embout, non représenté sur les figures, adapté à l'utilisation pour laquelle est prévue la pièce d'adaptation. On pourra par exemple prévoir un embout comportant une brosse pour le lavage, ou un embout en forme de pomme d'arrosoir pour l'épandage, ou un embout produisant un jet pour la pulvérisation. La canalisation de sortie 10 est précédée d'une chambre de mélange 11 elle-même précédée d'une partie tubulaire 12 destinée à pénétrer dans le second alésage 5 de la canalisation d'entrée. La surface extérieure de la partie tubulaire 12 est conformée pour s'adapter dans la canalisation d'entrée, et comporte un joint d'étanchéité 13. Cette partie tubulaire 12 pénètre dans l'alésage 5 sur une longueur suffisante pour assurer le guidage et le maintien de la pièce d'adaptation 3 par rapport au corps 1. Des moyens d'accrochage sont prévus pour solidariser la pièce d'adaptation 3 sur le corps 1, par exemple une patte 14 élastique munie d'un trou dans lequel s'engage un ergot 15 du corps en fin d'emboîtage de la partie tubulaire 12 dans l'alésage 5.

La partie tubulaire 12 comporte un alésage longitudinal 16 dont le diamètre est déterminé en fonction de la fluidité des produits à mélanger dans l'eau, de façon à obtenir une concentration correcte dans la chambre de mélange. Ainsi, pour les applications demandant un grand débit d'eau et un faible débit de produit, l'alésage 16 pourra être choisi de dimensions plus importantes que dans les applications requérant un faible débit d'eau.

La chambre de mélange 11 est reliée au réservoir 2 par l'intermédiaire d'une première canalisation secondaire 17 munie d'un orifice intermédiaire de mise à l'air libre 18 séparant une portion aval 17a et une portion amont 17b de la canalisation secondaire. De manière préférée, l'orifice de mise à l'air libre 18 est situé au voisinage de la chambre de mélange.

Afin d'éviter l'écoulement intempestif de liquide hors du réservoir, notamment lorsqu'on secoue l'appareil, la partie amont 17b de la canalisation secondaire est coudée de façon que ses deux extrémités soient dirigées sensiblement dans la même direction, comme le représente la figure.

La portion amont 17b de la canalisation secondaire 17 se raccorde à la portion aval 17a par une zone de rétrécissement 17c produisant un écoulement de fluide régulier sous forme de jet.

Le réservoir 2 comprend une enveloppe tubulaire extérieure rigide 19 dans laquelle coulisse une paroi mobile 20 formant piston et munie éventuellement de joints d'étanchéité périphériques. La première extrémité 21 de l'enveloppe rigide 19 s'adapte de manière étanche sur le réceptacle 7. On a représenté sur la figure une adaptation par un joint torique 8a entourant une partie cylindrique du fond 8 et sur lequel s'emmanche l'extrémité 21. En alternative, on peut prévoir que l'extrémité 21 pénètre de façon étanche à l'intérieur d'un logement conique défini par la paroi 9 du réceptacle. L'extrémité 21 peut être élastique et de forme extérieure conique. La seconde extrémité 22 de l'enveloppe tubulaire rigide 19 est fermée par un fond 23 muni d'un embout d'évacuation 24 formant orifice de sortie du réservoir. L'embout 24 est destiné à recevoir, par emmanchement étanche, l'extrémité de la canalisation secondaire 17 formée d'un tuyau souple. La pièce d'adaptation 3 fait également office d'organe d'assemblage et de maintien du réservoir, par le fait qu'elle comprend une partie 25 qui repousse le réservoir vers le réceptacle 7.

La paroi mobile 20 sépare le réservoir 2 en une première enceinte 26 destinée à contenir un liquide à injecter, et une seconde enceinte 27 formant chambre de poussée. Cette seconde enceinte 27 est limitée par la paroi mobile 20, par la partie postérieure de l'enveloppe tubulaire rigide 19, et par le fond 8 du réceptacle 7. Une seconde canalisation secondaire 28 débouche dans le fond 8 du réceptacle, et le met en communication avec le premier alésage 4 de la canalisation d'entrée à travers l'organe de commande 6. Cette seconde canalisation secondaire 28 est calibrée par un bouchon de calibrage 29 muni d'un trou calibré 30 et adapté à son orifice de sortie dans le réceptacle 7 du corps 1.

Comme le représente la figure, l'organe de commande 6 est un robinet d'arrêt de forme générale cylindrique, inséré dans un alésage cylindrique 31 correspondant du corps 1. Le robinet 6 comprend une portion supérieure 32 de diamètre légèrement inférieur au diamètre dè l'alésage 31, une portion inférieure 33 de même diamètre, et une portion médiane 34 de diamètre inférieur. La portion supérieure 32 et la portion inférieure 33 sont munies d'un joint d'étanchéité torique respectivement 35 et 36 assurant l'étanchéité entre le robinet et les parois de l'alésage 31. La portion supérieure 32 comprend, au voisinage de son extrémité inférieure, un joint d'étanchéité 37 elliptique monté obliquement, comme le représente la figure, et assurant également l'étanchéité dans l'alésage 31.

Le robinet d'arrêt 6 est mobile par translation dans son alésage 31 entre une position haute, représentée sur la figure, dans laquelle le joint supérieur 35 vient porter sur les parois d'extrémité supérieures de l'alésage 31 pour mettre en communication les deux parties de la canalisation secondaire 28 et asssurer le passage de l'eau dans la chambre de poussée 27. Les deux parties de la canalisation secondaire 28 sont décalées, comme le représente la figure, de façon que dans la seconde position inférieure du robinet, non représentée sur la figure, la partie droite du joint supérieur 35 porte encore contre la paroi d'extrémité supérieure de l'alésage 31, mais la partie gauche du joint 35 porte en-dessous de la portion de seconde canalisation secondaire 28, de sorte que la conduction d'eau est alors interrompue dans la canalisation 28. En outre, l'eau ou l'air contenu dans la chambre de poussée 27 peut s'écouler à travers la canalisation secondaire 28 et l'alésage 31 vers l'extérieur, notamment sous l'effet d'une surpression. Cette fonction est notamment utile lors de la mise en place d'un réservoir 2 pour éviter qu'une surpression dans le réceptacle 7 ne repousse la paroi mobile 20 et ne produise une sortie de fluide par l'embout 24.

Dans les applications nécessitant des trous calibrés 30 de petit diamètre, il peut s'avérer nécessaire de prévoir une canalisation supplémentaire de mise à l'air libre de la chambre de poussée, obturable par l'utilisateur, et de diamètre suffisant pour rendre négligeable la surpression créée lors de la mise en place de la cartouche.

Le robinet d'arrêt 6 est également mobile par rotation dans l'alésage 31, la rotation produisant le réglage de débit d'eau dans la canalisation principale 4-5. En position d'ouverture, représentée sur la figure, la portion supérieure du joint médian 37 porte contre la partie droite de l'alésage 31 au-dessus de l'orifice correspondant 38 du premier alésage 4. Lorsque l'on fait effectuer une rotation de 180 degrés au robinet 6, le joint 37 vient porter par sa portion inférieure 39 contre la partie inférieure 40 de l'alésage 31, en-dessous de l'orifice 38 pour interrompre la conduction d'eau.

On peut bien entendu combiner les mouvements de translation et de rotation du robinet. Le joint inférieur 36 porte, dans les deux positions extrêmes de translation, contre la partie inférieure de l'alésage 31 sans modifier l'écoulement de l'eau. Par contre, le joint médian 37, lorsque le robinet d'arrêt 6 est en position angulaire d'écoulement partiel de l'eau, vient modifier l'ouverture de la canalisation d'entrée selon la position de translation du robinet d'arrêt. Supposons par exemple que le robinet soit en position basse, interdisant l'écoulement de fluide, et qu'il soit en position angulaire à 90 degrés pour permettre un écoulement limité. Si l'on relève le robinet pour admettre l'écoulement de fluide, le joint 37 se relève également et produit une augmentation du débit d'eau, comme on le comprendra aisément sur la figure.

Lors de l'écoulement de l'eau, une aspiration est produite dans la portion aval 17a de la canalisation secondaire 17 en provenance de la chambre de mélange 11. L'orifice de mise à l'air libre 18 permet l'admission d'air dans la portion aval 17a de la canalisation secondaire 17, de sorte que l'aspiration produite dans la chambre de mélange 11 est transmise de façon négligeable au fluide contenu dans la portion amont 17b et dans le réservoir 2. Cette disposition, tout en permettant un bon mélange dans la chambre de mélange, évite l'aspiration constante du fluide contenu dans le réservoir, et empêche son passage dans la chambre de mélange quand le robinet 6 est fermé ; le fluide est aspiré après son déversement dans la portion aval 17a de la canalisation 17, c'est-à-dire lorsque le robinet 6 est ouvert. Le Demandeur a pu constater que la présence de cet orifice 18 ne présente pas de gêne pour le fonctionnement de l'appareil, et que par exemple le fluide ne s'écoule pas à l'extérieur de l'appareil par cet orifice. Il faut toutefois pour cela que le robinet d'arrêt 6 soit prévu pour assurer de façon certaine un écoulement d'eau dans la canalisation principale lorsque de l'eau pénètre dans la chambre de poussée 27. le robinet 6 tel que représenté sur la figure peut éventuellement résoudre ce problème. On peut en effet prévoir que, en position haute du robinet 6 tel que représenté sur la figure, la partie inférieure 39 du joint médian 37 vient porter dans l'orifice 38 et permet l'admission d'au moins un faible débit d'eau dans le second alésage 5 de la canalisation d'entrée.

L'enveloppe tubulaire rigide 19 du réservoir 2 est réalisée de préférence en une matière translucide pour laisser apparaître la paroi mobile 20 qui fait ainsi ofice d'indicateur de consommation. En outre, on pourra ménager des repères ou graduations sur la paroi latérale 19, pour permettre à l'utilisateur d'apprécier de façon plus précise cette consommation, notamment dans les cas d'épandage de produits pour lesquels la quantité de produit par mètre carré doit être bien déterminée.

L'extrémité 22 de l'enveloppe tubulaire 19 forme une portion cylindrique dépassante 22a comportant un créneau. Lors de la mise en place du réservoir, on présente le créneau en face de la partie 25, puis, par rotation axiale de l'enveloppe 19, on verrouille en engageant la portion cylindrique dépassante 22a sous la partie 25 en forme d'ergot.

Dans le mode de réalisation représenté sur la figure, l'organe de commande 6 est réalisé par un seul robinet double. On pourra toutefois utiliser deux robinets différents, de préférence couplés mécaniquement l'un à l'autre de façon à produire l'ouverture du robinet principal de débit d'eau avant celle du robinet secondaire de débit de liquide, et la fermeture du robinet de débit d'eau après celle du robinet secondaire.

Le dispositif comprend en outre des moyens pour limiter la pression dans la chambre de poussée 27 en fin de parcours de la paroi mobile 20. En effet, si la pression n'est pas limitée, on risque de détériorer le réservoir 2 et éventuellemnt d'arracher la pièce d'adaptation 3. On peut par exemple prévoir une vanne de limitation de pression, non représentée sur la figure, pour assurer l'écoulement de l'eau de la chambre de poussée 27 vers l'extérieur. On pourra toutefois préférer un autre mode de réalisation dans lequel on provoque un défaut d'étanchéité de la paroi mobile 20 en fin de course. Par exemple on ménage une ou plusieurs rainures 41 longitudinales sur la portion antérieure de la surface intérieure de l'enveloppe 19, rainures de longueur supérieure à l'épaisseur de la paroi 20, pour mettre en communication la chambre de poussée 27 et la canalisation secondaire 17. Il est alors préférable de prévoir également des moyens de butée antérieure telle que la butée 42 pour éviter que la paroi 20 n'obture l'embouchure 24.

Une autre possibilité peut être de prévoir sur la paroi 20 une zone de plus faible résistance destinée à céder sous l'effet d'une différence de pression supérieure à un seuil admissible, et à mettre ainsi en communication la chambre 27 avec la canalisation 17. On peut aussi remplacer les rainures 41 par une nervure, l'enveloppe rigide 19 se déformant légèrement lorsque la paroi 20 repousse la nervure. Dans le cas de réservoirs réutilisables ou rechargeables, cette caractéristique présente l'avantage supplémentaire d'assurer un rinçage automatique du réservoir.

La présente invention n'est pas limitée aux modes de réalisation qui ont été explicitement décrits, mais elle en inclut les diverses variantes et généralisations contenues dans le domaine des revendications ci-après.

## REVENDICATIONS

1 - Dispositif d'injection et de mélange d'un produit liquide dans un circuit d'eau, comprenant un corps principal (1) servant d'organe de préhension et comportant une canalisation d'entrée (4, 5) obturable par un robinet (6) principal de réglage de débit et une canalisation de sortie (10) reliée à la canalisation d'entrée par une chambre de mélange (11) elle-même raccordée par une première canalisation secondaire (17) à un réservoir (2) destiné à contenir le produit à injecter, le réservoir comprenant une enveloppe tubulaire rigide (19) dans laquelle coulisse de façon étanche une paroi déplaçable (20) en forme de piston formant séparation entre le réservoir et une chambre de poussée (27) raccordée à la canalisation d'entrée (4) par une seconde canalisation secondaire (28) ménagée dans le corps (1) et munie d'un robinet secondaire (6) de réglage de débit, caractérisé en ce que :

- le réservoir (2) forme une partie amovible, comportant l'enveloppe tubulaire (19) fermée d'une part à sa seconde extrémité (22) par un fond (23) muni d'un orifice de sortie (24) et fermée d'autre part par la paroi déplaçable (20) ;

- le corps (1) comporte une portion formant réceptacle (7) dans laquelle débouche la seconde canalisation secondaire (28) ;

- l'enveloppe tubulaire (19) s'adapte, par sa première extrémité (21), sur le réceptacle (7) pour définir la chambre de poussée (27) ;

- des moyens d'assemblage (25, 3) solidarisent le réservoir sur le corps (1) ;

- des moyens d'étanchéité assurent l'étanchéité entre le réceptacle (7) et l'enveloppe tubulaire (19) et entre l'orifice de sortie (24) et la première canalisation secondaire (17).

2 - Dispositif selon la revendication 1, caractérisé en ce que l'enveloppe rigide (19) a une première extrémité (21) venant s'emmancher de façon étanche sur une partie cylindrique du fond (8) du réceptacle (7) avec interposition d'un joint torique d'étanchéité (8a), la seconde extrémité (22) de l'enveloppe rigide (19) étant sollicitée par les moyens d'assemblage (25, 3) la repoussant en direction du réceptacle.

3 - Dispositif selon la revendication 2, caractérisé en ce qu'il comprend en outre une pièce d'adaptation (3) rapportée différente pour chaque application d'idée, les pièces d'adaptation comportant la canalisation de sortie (10), la canalisation secondaire (17) avec des moyens de connexion à l'orifice de sortie (24) du réservoir (2), et la chambre de mélange (11), la pièce d'adaptation comportant une partie tubulaire (12) à alésage calibré (16) connectable sur la canalisation d'entrée (5) et destinée à assurer les débits d'eau convenables pour l'application visée, et la pièce d'adaptation (3) étant retenue sur le corps (1) par des moyens d'accrochage (14, 15) et formant elle-même butée et moyen d'assemblage (25) pour le réservoir (2).

4 - Dispositif selon la revendication 1, caractérisé en ce que les robinets de réglage de débit sont couplés mécaniquement l'un à l'autre (6) de façon à produire l'ouverture du robinet principal de débit d'eau avant celle du robinet secondaire, et la fermeture du robinet de débit d'eau après celle du robinet secondaire.

5 - Dispositif selon la revendication 1, caractérisé en ce que les robinets sont réalisés par un robinet unique à tiroirs (6) de forme générale cylindrique, inséré dans un alésage (31) cylindrique correspondant du corps principal (1) comportant une portion supérieure (32) et une portion inférieure (33) de diamètre légèrement inférieur au diamètre de l'alésage, et une portion médiane (34) de diamètre nettement inférieur au diamètre de l'alésage, les portions supérieure et inférieure étant munies de joints d'étanchéité toriques (35, 36), la portion supérieure comprenant en outre au voisinage de sa partie inférieure un joint elliptique (37) monté obliquement, le tiroir étant mobile par translation et par rotation, une rotation commandant le débit d'eau dans la canalisation d'entrée par le joint elliptique (37), une translation commandant l'ouverture ou la fermeture de la seconde canalisation secondaire (28) par le joint torique supérieur (35) et simultanément une modification de débit d'eau par le joint elliptique (37) dans les positions angulaires d'écoulement partiel d'eau.

6 - Dispositif selon la revendication 1, caractérisé en ce que la canalisation secondaire (17) est munie d'un orifice (18) de mise à l'air libre au voisinage de la chambre de mélange (11).

7 - Dispositif selon la revendication 2, caractérisé en ce qu'il comprend des moyens (41) mettant en communication la chambre de poussée (27) avec la canalisation secondaire (17) en fin de course de la paroi mobile (20).

8 - Dispositif selon la revendication 2, caractérisé en ce que l'enveloppe tubulaire rigide (19) du tube est translucide pour laisser

13

0133143

apparaître la paroi mobile (20) qui fait office d'indicateur de consommation, l'enveloppe tubulaire comportant des repères de position.

9 - Dispositif selon la revendication 1, caractérisé en ce que la seconde canalisation secondaire (26) est calibrée par un bouchon de calibrage (29) adapté à son orifice de sortie dans le réceptacle (7) du corps (1).

10 - Dispositif selon la revendication 1, caractérisé en ce que la canalisation secondaire (17) comporte une portion amont (17b) coudée de sorte que ses deux extrémités soient dirigées sensiblement dans la même direction, et se raccorde à une portion aval (17a) par une zone de rétrécissement (17c).

Office européen des brevets

**RAPPORT DE RECHERCHE EUROPEENNE**

0133143

Numéro de la demande

EP 84 42 0125

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. ³) |
|---|---|---|---|
| Y | GB-A- 15 458 (W.S. WATSON) (A.D. 1912) * page 1, lignes 4-27; page 3, lignes 21-32; revendications 1-3; figure 1 * | 1 | C 02 F 1/68 B 05 B 7/32 B 01 F 5/04 |
| | --- | | |
| Y | FR-A-1 133 293 (B. RONDOLINO) * page 1, colonne 1, lignes 26-42; page 2, colonne 1, lignes 4-31; résumé; figure 6 * | 1 | |
| | --- | | |
| Y | US-A-1 347 520 (P. RASCH) * page 2, lignes 50-87; revendications; figures * | 1 | |
| | --- | | |
| Y | GB-A- 723 721 (TECALEMIT LTD.) * page 1, lignes 8-36; revendication 1; figure * | 1 | DOMAINES TECHNIQUES RECHERCHES (Int. Cl. ³) |
| | --- | | |
| Y | GB-A- 694 946 (NATIONAL COAL BOARD) * page 1, lignes 12-28; revendications 1,3; figure 1 * | 1 | C 02 F B 01 F B 05 B A 46 B |
| | ----- | | |

Le présent rapport de recherche a été établi pour toutes les revendications

| Lieu de la recherche | Date d'achèvement de la recherche | Examinateur |
|---|---|---|
| LA HAYE | 11-10-1984 | BANNWARTH C.L. |